# EUROPÄISCHE PATENTSCHRIFT

(11) **EP 0 560 027 B1**
(45) Veröffentlichungstag und Bekanntmachung des Hinweises auf die Patenterteilung: **12.06.1996**
(21) Anmeldenummer: 93101037.5
(22) Anmeldetag: 23.01.1993
(51) Int. Cl.: B60J 7/185, E05B 65/12, E05C 9/18

(54) **Schliessvorrichtung an einem Cabriolet-Faltverdeck**
Closing device at a folding top of a cabriolet
Dispositif de fermeture pour à une capote pliante d'un carbriolet

(30) Priorität: 11.03.1992 DE 9203285 U
(43) Veröffentlichungstag der Anmeldung: 15.09.1993
(73) Patentinhaber: Wilhelm Karmann GmbH, D-49084 Osnabrück (DE)
(72) Erfinder: Brandt, Armin, W-4834 Harsewinkel (DE); Richter, Wolfgang, W-4512 Wallenhorst (DE)
(74) Vertreter: Busse & Busse Patentanwälte

(56) Entgegenhaltungen:
- US-A- 2 886 364

## Beschreibung

Die Erfindung bezieht sich auf eine Schließvorrichtung an einem Cabriolet-Faltverdeck nach dem Oberbegriff des Anspruches 1.

Eine bekannte Schließvorrichtung dieser Art gemäß US-A-2,886,364 ist mit zwei in Schließstellung des Faltverdecks in jeweils am Windschutzscheibenrahmen befindliche Gegenlager eingreifenden und mittels eines Betätigungsgriffes in der Schließstellung ein- bzw. bei Öffnung aus den Gegenlagern ausrastenden Riegelorganen versehen, wobei die Riegelorgane über ein eine synchrone Schwenkbewegung vermittelndes Verbindungsglied verbunden sind und diesem mittig der als ein Einhand-Schwenkgriff ausgebildete Betätigungsgriff zugeordnet ist. Diese bekannte Schließvorrichtung ist konstruktiv und herstellungstechnisch aufwendig und läßt am Handgriff nicht spüren, ob das Ver- und Entriegeln sicher erfolgt.

Der Erfindung liegt die Aufgabe zugrunde, eine Schließvorrichtung an einem Faltverdeck eines Cabriolets-Fahrzeuges zu schaffen, die mit geringem konstruktiven Aufwand eine bedienfreundliche und -sichere Ver- und Entriegelung des Faltverdeckes ermöglicht.

Die Erfindung löst diese Aufgabe durch eine Schließvorrichtung mit den Merkmalen des Anspruchs 1. Hinsichtlich wesentlicher weiterer Ausgestaltungsmerkmale wird auf die Ansprüche 2 bis 6 verwiesen.

Die Erfindung schafft mit wenigen Einzelbauteilen eine Schließvorrichtung, mit der die zwei Riegelorgane über das lediglich eine Verbindungsglied hinreichend verwindungssteif derart verbunden sind, daß mit dem mittig zugeordneten Einhand-Schwenkgriff sowohl die Ver- und Entriegelungsbewegungen als auch eine Bewegung des gesamten Faltverdecks mit hohem Bedienkomfort ausführbar sind und beispielsweise beim Schließen des Faltverdecks mit einer einfachen Schwenkbewegung am Einhand-Schwenkgriff eine lagegenaue Positionierung der Riegelorgane zu den Gegenlagern hin und ohne nochmaligen Wechsel der Greifstellung eine synchrone Rastung der Riegelorgane erreichbar ist.

Die zweckmäßige Gestaltung der Einzelteile der Verriegelungsvorrichtung ermöglicht deren vorteilhafte Integration in den Verdeckhimmel, so daß mit geringem Aufwand eine in Schließstellung des Faltverdecks optisch einheitliche innere Dachfläche gebildet ist. Dies läßt sich insbesondere dann erreichen, wenn gemäß einer Ausführung nach dem DE-U-91 08 242 im vorderen Teil des Faltverdecks eine formstabile Verdeckschale vorgesehen ist.

Hinsichtlich weiterer Vorteile und Einzelheiten wird auf die nachfolgende Beschreibung und die Zeichnungen verwiesen, in der ein Ausführungsbeispiel des Gegenstands der Erfindung schematisch näher veranschaulicht ist. In den Zeichnungen zeigen:
- Fig. 1: eine teilweise geschnittene Perspektivdarstellung eines Cabriolet-Fahrzeuges im Bereich der Windschutzscheibe mit einer erfindungsgemäßen Schließvorrichtung in einer Schließstellung,
- Fig. 2: eine Prinzipdarstellung ähnlich Fig. 1 mit der Schließvorrichtung in einer ersten Öffnungsphase,
- Fig. 3: eine Prinzipdarstellung ähnlich Fig. 1 oder 2, mit der Schließvorrichtung in Öffnungsstellung und
- Fig. 4: eine vergrößerte Einzeldarstellung der Schließvorrichtung im Bereich eines Endes eines rohrförmigen Verbindungsgliedes.

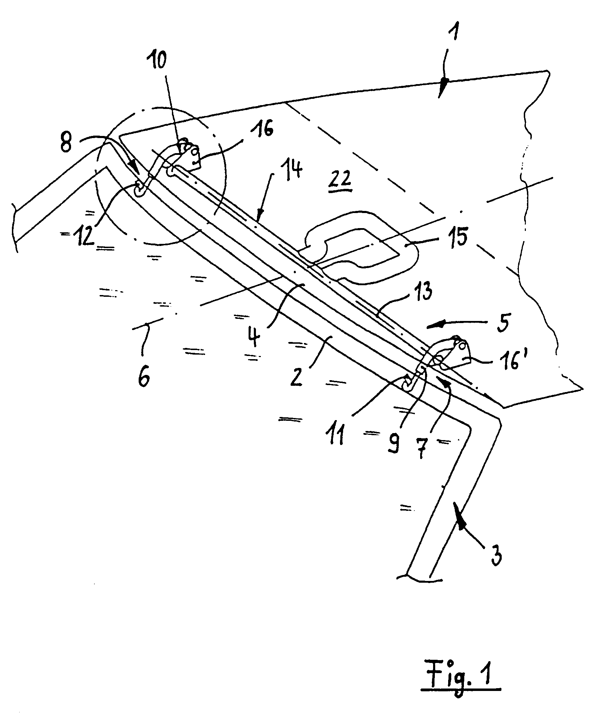

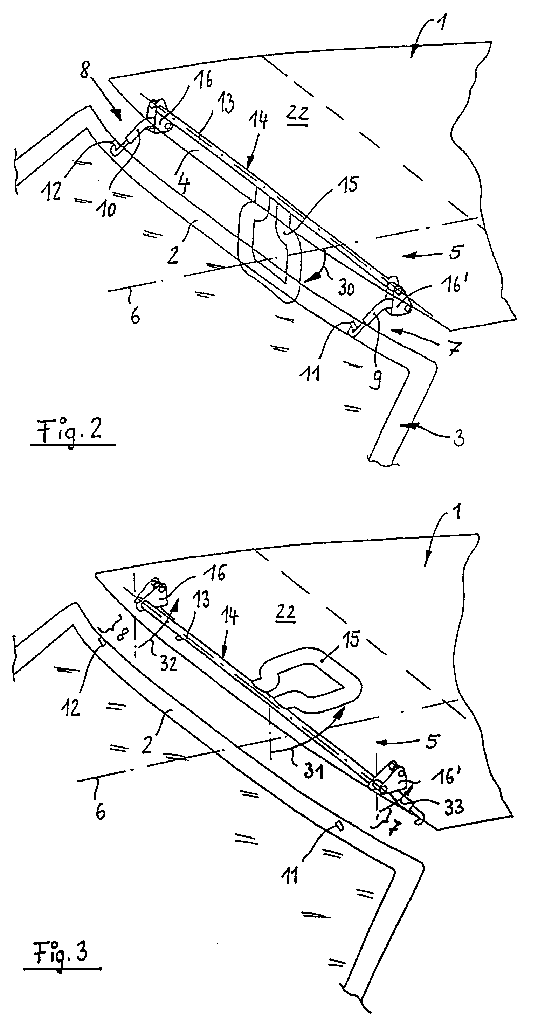

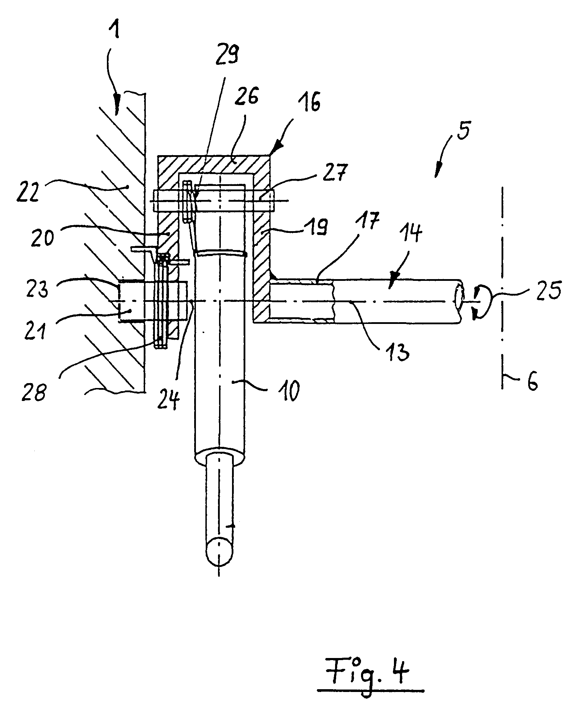

In Fig. 1 ist ein insgesamt mit 1 bezeichnetes Faltverdeck eines Cabriolet-Fahrzeuges dargestellt, das sich in einer Schließstellung im Bereich einer oberen Rahmenstrebe 2 eines Windschutzscheibenrahmens 3 befindet. Nahe dem vorderen Rand 4 des Faltverdeckes 1 ist dabei eine insgesamt mit 5 bezeichnete Schließvorrichtung vorgesehen, die zwei parallel zu einer Fahrzeugmittenebene 6 befindliche Schließbereiche 7,8 aufweist, in denen jeweils ein Riegelorgan 9,10 in ein Gegenlager 11,12 im Bereich der Rahmenstrebe 2 eingreift.

Im Bereich der zum Faltverdeck 1 gerichteten Enden der Riegelorgane 9,10 sind diese dabei über ein eine Verbindungsachse 13 aufweisendes Verbindungsglied 14 derart miteinander verbunden, daß mit einem als ein Einhand-Schwenkgriff ausgebildeten, im Bereich der Fahrzeugmittenebene 6 befindlichen Betätigungsgriff 15 eine synchrone Schwenkbewegung auf die im jeweiligen Schließbereich 7,8 abgestützten Riegelorgane 9,10 eingeleitet werden kann (Fig. 3, Fig. 4).

Eine vergrößerte Einzeldarstellung gemäß Fig. 4 verdeutlicht, daß die jeweils endseitig am Verbindungsglied 14 befindlichen Riegelorgane 9,10 in einem Haltekörper 16 (bzw. 16' am anderen Ende) aufgenommen sind, der seinerseits schwenkbeweglich am Faltverdeck 1 abgestützt ist. In der dargestellten Ausführungsform ist das mit dem Haltekörper 16 verbundene, insbesondere angeschweißte Verbindungsglied 14 aus einem verwindungssteifen Rohr 17 gebildet, wobei stattdessen auch ein Flachmaterial (nicht dargestellt) vorgesehen sein kann. Damit ist das Verbindungsglied 14 insgesamt hinreichend federelastisch und in sich verdrehsteif, so daß die über den Betätigungsgriff 15 wirksamen Kräfte sicher aufgenommen werden können.

Der Haltekörper 16 ist zweckmäßig als ein U-Profilkörper ausgebildet, der einen zur Fahrzeugmittenebene 6 gerichteten Stützschenkel 19 aufweist, der mit dem Verbindungsglied 14 verbunden ist. Zu diesem Stützschenkel 19 ist parallel beabstandet ein äußerer Stützschenkel 20 vorgesehen, der mit einem Stützbolzen 21 den Haltekörper 16 insgesamt am Faltverdeck 1 bzw. einem formstabilen Verdeckschalenbereich 22 schwenkbeweglich in einer Formausnehmung 23 abstützt.

In der dargestellten Schwenkstellung der Schließvorrichtung 5 gemäß Fig. 4 bilden die Verbindungsachse 13 und eine Stützbolzenachsbereich 24 eine gemeinsame Schwenkachse, um die die Bauteile gleichzeitig in einer Pfeilrichtung 25 bewegt werden können.

In zweckmäßiger Ausführungsform sind die Riegelorgane 9,10 in ihrem jeweiligen Haltekörper 16,16' jeweils zwischen den Stützschenkeln 19,20 nahe einem Basisschenkel 26 über einen Achsbolzen 27 (Fig. 4) schwenkbeweglich gelagert, so daß damit für die Riegelorgane 9,10 eine zusätzliche Schwenkachse gebildet ist.

In den jeweiligen Schließbereichen 7,8 der Schließvorrichtung 5 sind ferner sowohl im Bereich des Stützbolzens 21 zwischen dem äußeren Stützschenkel 20 und dem Faltverdeck 1 als auch am Achsbolzen 27 im jeweiligen Endbereich des Riegelorgans 9,10 jeweils eine Rückholfeder 28 bzw. 29 vorgesehen, so daß damit die Einzelteile der Schließvorrichtung 5, z.B. unter Wirkung der über den Betätigungsgriff 15 eingeleiteten Kräfte, in jeweiligen Sollstellungen positionierbar sind.

In einer weiteren Ausführungsform kann im Bereich der endseitig in die jeweiligen Haltekörper 16,16' ragenden Riegelorgane 9,10 ein deren Positionierung steuerndes Exzenterglied (nicht dargestellt) vorgesehen sein, das in den verschiedenen Schließ- bzw. Öffnungsstellungen über das Verbindungsglied 14 wirksam betätigt wird.

In Fig. 2 und Fig. 3 sind beispielhaft für die Funktion der Schließvorrichtung 5 bei Ausführung einer Öffnungsbewegung für das Faltverdeck 1 unterschiedliche Bewegungsphasen der einzelnen Verschlußbauteile dargestellt. Der in Fig. 1 in Schließstellung befindliche Betätigungsgriff 15 kann in einer ersten Bewegungsphase gemäß Fig. 2 in einer Pfeilrichtung 30 zum Windschutzscheibenrahmen 3 hin geschwenkt werden, so daß dabei über das Verbindungsglied 14 die jeweiligen Haltekörper 16,16' in die gleiche Richtung schwenken, dabei das Faltverdeck 1 insgesamt anheben und die Riegelorgane 9,10 derart entlasten, daß diese in einer zweiten Bewegungsphase (Fig. 3) beim Schwenken des Betätigungsgriffes 15 in einer Pfeilrichtung 31 aus den Gegenlagern 11,12 in Bewegungsrichtungen 32,33 ausgeschwenkt und das Faltverdeck 1 ohne nochmaligen Wechsel der Greifstellung in den hinteren Teil des Fahrzeugs (nicht dargestellt) bewegt werden kann.

Für eine Verriegelung des Faltverdecks 1 des Fahrzeugs sind die vorbeschriebenen Bewegungsabläufe in umgekehrter Reihenfolge ausführbar, wobei der Einhand-Schwenkgriff 15 mit hohem Bedienkomfort einen sicheren Verschluß des Cabriolet-Fahrzeuges ermöglicht. .

## Patentansprüche

1. Schließvorrichtung an einem Cabriolet-Faltverdeck, die zwei in Schließstellung des Faltverdecks (1) in jeweils am Windschutzscheibenrahmen (3) befindliche Gegenlager (11, 12) eingreifende und in diese einrastende bzw. bei Öffnung aus den Gegenlagern (11, 12) ausrastende Riegelorgane (9, 10) umfaßt, die über einen mittig zwischen den Riegelorganen (9, 10) angeordneten und mit diesen mechanisch gekoppelten Einhand-Betätigungsgriff (15) gemeinsam verschwenkbar sind, **dadurch gekennzeichnet**, daß zur mechanischen Kopplung der beiden Riegelorgane (9, 10) ein sich durchgehend zwischen diesen erstreckendes, den Einhand-Betätigungsgriff (15) tragendes, verwindungssteifes Verbindungsglied (14) vorgesehen ist, das zu seiner Lagerung endseitig jeweils mit im Faltverdeck (1) schwenkbeweglich abgestützten Haltekörpern (16, 16') zur Aufnahme der Riegelorgane (9, 10) versehen ist.

2. Schließvorrichtung nach Anspruch 1, **dadurch gekennzeichnet**, daß das verwindungssteife Verbindungsglied (14) aus Rohr- oder Flachmaterial besteht.

3. Schließvorrichtung nach Anspruch 1 oder 2, **dadurch gekennzeichnet**, daß der jeweilige Haltekörper (16, 16') als U-Profil ausgebildet ist, wobei ein zur Fahrzeugmittenebene (6) gerichteter Stützschenkel (19) mit dem Verbindungsglied (14) und ein parallel beabstandeter äußerer Stützschenkel (20) mit einem am Faltverdeck (1) gelagerten Stützbolzen (21) verbunden ist.

4. Schließvorrichtung nach Anspruch 3, **dadurch gekennzeichnet**, daß das Verbindungsglied (14) und der Stützbolzen (21) zumindest im Bereich der Haltekörper (16, 16') eine eine gemeinsame Schwenkachse bildende Verbindungsachse (13) aufweisen.

5. Schließvorrichtung nach Anspruch 3 oder 4, **dadurch gekennzeichnet**, daß die Riegelorgane (9, 10) jeweils zwischen den Stützschenkeln (19, 20) des Haltekörpers (16) nahe dessen Basisschenkel (26) über einen Achsbolzen (27) schwenkbeweglich gelagert sind.

6. Schließvorrichtung nach Anspruch 5, **dadurch gekennzeichnet**, daß sowohl im Bereich der Stützbolzen (21) zwischen dem äußeren Stützschenkel (20) und dem Faltverdeck (1) als auch am Achsbolzen (27) im jeweiligen Endbereich des Riegelorgans (10) zumindest eine Rückholfeder (28, 29) angeordnet ist.

## Claims

1. A closure device on a folding roof of a cabriolet and comprising two locking members (9, 10) which engage mating bearings (11, 12) disposed on the windscreen frame (3) when the folding roof (1) is in the closed position and become disengaged from the mating bearings (11, 12) when the folding roof is opened, said locking members (9, 10) being adapted to pivot jointly by means of an operating handle (15) designed for single-handed operation and which is mechanically coupled to and disposed centrally between the locking members (9, 10), characterised in that for mechanical coupling of the two locking members (9, 10), a torsion-resistant connecting member (14) extending continuously between them and carrying the operating handle (15) is provided which, for its mounting, is provided with retaining members (16, 16') the ends of which are adapted for pivoting movement in the folding roof (1), to accommodate the locking members (9, 10).

2. A closure device according to claim 1, characterised in that the torsion-resistant connecting member (14) consists of tubular or flat material.

3. A closure device according to claim 1 or 2, characterised in that the respective retaining member (16, 16') is constructed as a U-profile, whereby a bracing member (19) directed towards the central plane (6) through the vehicle is connected to the connecting member (14) while a parallel spaced-apart outer bracing member (20) is connected to a bracing bolt (21) mounted on the collapsible roof (1).

4. A closure device according to claim 3, characterised in that the connecting member (14) and the bracing member (21) have, at least in the region of the retaining members (16, 16') a connecting spindle (13) which forms a common pivot axis.

5. A closure device according to claim 3 or 4, characterised in that the locking members (9, 10) are in each case mounted between the bracing members (19, 20) of the retaining member (16) close to its base member (26) by a pivot pin (27).

6. A closure device according to claim 5, characterised in that at least one return spring (28, 29) is disposed both in the region of the bracing bolts (21) between the outer bracing arm (20) and the collapsible roof (1) and also on the pivot pin (27) in the respective end portion of the locking member (10).

## Revendications

1. Dispositif de fermeture d'une capote pliante de cabriolet, comportant deux organes de verrouillage (9, 10) qui, en position de fermeture de la capote (1), sont en prise avec blocage dans des contrepaliers (11, 12) prévus dans le cadre (3) du pare-brise, l'ouverture de la capote s'effectuant par déblocage des organes de verrouillage (9, 10) qui peuvent basculer ensemble sous l'action d'une poignée (15) manoeuvrable d'une seule main, accouplée mécaniquement aux organes (9, 10) et montée entre eux, en position médiane, caractérisé en ce que pour accoupler mécaniquement les deux organes de verrouillage (9, 10) il est prévu, s'étendant en continu entre ces organes et portant la poignée de manoeuvre (15), un organe de liaison (14) rigide en torsion et muni à chacune de ses extrémités d'un support (16, 16') monté basculant dans la capote (1) et recevant un organe de verrouillage (9, 10).

2. Dispositif selon la revendication 1, caractérisé en ce que l'organe de liaison (14) rigide en torsion est un élément tubulaire ou plat.

3. Dispositif selon la revendication 1 ou 2, caractérisé en ce que chaque support (16, 16') est un profilé en U dont la branche (19) située du côté du plan médian (6) du véhicule est reliée à l'organe de liaison (14), tandis que l'autre branche (20) qui lui est parallèle et située vers l'extérieur est reliée à un pivot d'appui (21) logé dans la capote (1).

4. Dispositif selon la revendication 3, caractérisé en ce que l'organe de liaison (14) et le pivot d'appui (21) ont au moins au niveau du support (16, 16') un axe de liaison (13), constituant un axe commun de basculement.

5. Dispositif selon la revendication 3 ou 4, caractérisé en ce que les organes de verrouillage (9, 10) sont montés chacun entre les branches (19, 20) du support (16) en rotation autour d'un pivot (27) placé près de la branche de base (26) du support (16).

6. Dispositif de fermeture selon la revendication 5, caractérisé en ce qu'au moins un ressort de rappel (28, 29) est monté d'une part autour du pivot d'appui (21) entre la branche externe (20) et la capote (1), d'autre part autour du pivot (27) situé à l'extrémité de l'organe de verrouillage (10).
